# EUROPEAN PATENT SPECIFICATION

(11) **EP 1 050 134 B1**
(45) Date of publication and mention of the grant of the patent: **03.08.2016**
(21) Application number: 99901542.3
(22) Date of filing: 01.02.1999
(51) Int. Cl.: H04L 9/32

(54) **SECURE ONE-WAY AUTHENTICATION COMMUNICATION SYSTEM**
GESICHERTES KOMMUNIKATIONSSYSTEM UNTER VERWENDUNG EINER EINWEGAUTHENTIFIZIERUNG
SYSTÈME DE COMMUNICATION AVEC AUTHENTIFICATION UNIDIRECTIONNELLE SÉCURISEE

(30) Priority: 30.01.1998 GB 9802152
(43) Date of publication of application: 08.11.2000
(73) Proprietor: Certicom Corp., Mississauga, Ontario L4W 0B5 (CA)
(72) Inventor: VANSTONE, Scott, A., Waterloo, Ontario N2T 2H4 (CA); VADEKAR, Ashok, V., Rockwood, Ontario N0B 2K0 (CA); LAMBERT, Robert, J., Cambridge, Ontario N3C 3N3 (CA); GALLANT, Robert, P., Mississauga, Ontario L5M 5N1 (CA)
(74) Representative: Moore, Barry
(86) International application number: PCT/CA1999/000053
(87) International publication number: WO 1999/039476

(56) References cited:
- EP-A- 0 535 863
- WO-A1-98/39878
- "LIMITATIONS OF CHALLENGE-RESPONSE ENTITY AUTHENTICATION" ELECTRONICS LETTERS (STEVENAGE GB), vol. 25, no. 17, 17 August 1989, page 1195/1196 XP000054010
- KRAWCZYK H: "SKEME: a versatile secure key exchange mechanism for Internet", NETWORK AND DISTRIBUTED SYSTEM SECURITY, 1996., PROCEEDINGS OF THE SYM POSIUM ON SAN DIEGO, CA, USA 22-23 FEB. 1996, LOS ALAMITOS, CA, USA,IEEE COMPUT. SOC, US, 22 February 1996 (1996-02-22), pages 114-127, XP010158990, DOI: 10.1109/NDSS.1996.492418 ISBN: 978-0-8186-7222-4
- JABLON D P: "Extended password key exchange protocols immune to dictionary attack", ENABLING TECHNOLOGIES: INFRASTRUCTURE FOR COLLABORATIVE ENTERPRISES, 1 997. PROCEEDINGS., SIXTH IEEE WORKSHOPS ON CAMBRIDGE, MA, USA 18-20 JUNE 1997, LOS ALAMITOS, CA, USA,IEEE COMPUT. SOC, US, 18 June 1997 (1997-06-18), pages 248-255, XP010253331, DOI: 10.1109/ENABL.1997.630822 ISBN: 978-0-8186-7967-4
- SCHNORR C P: "EFFICIENT SIGNATURE GENERATION BY SMART CARDS", JOURNAL OF CRYPTOLOGY, NEW YORK, NY, US, vol. 4, 1 January 1991 (1991-01-01), pages 161-174, XP000573164, DOI: 10.1007/BF00196725
- JABLON D P: "Extended password key exchange protocols immune to dictionary attack", ENABLING TECHNOLOGIES: INFRASTRUCTURE FOR COLLABORATIVE ENTERPRISES, 1 997. PROCEEDINGS., SIXTH IEEE WORKSHOPS ON CAMBRIDGE, MA, USA 18-20 JUNE 1997, LOS ALAMITOS, CA, USA,IEEE COMPUT. SOC, US, 18 June 1997 (1997-06-18), pages 248-255, XP010253331, DOI: 10.1109/ENABL.1997.630822 ISBN: 978-0-8186-7967-4

## Description

This invention relates to a protocol for the secure verification of correspondents in a data communication system and in particular to the verification of at least one of the correspondents having limited computing power.

### BACKGROUND OF THE INVENTION

Traditionally, a mechanical turnstile system was used to restrict the entry of persons into or out of a pre-determined area. In order to gain entry, the user is required to pay a fee, the fee being in the form of cash, tokens, fee cards or other payment medium. These mechanical turnstiles however allow entry without being able to identify the persons entering or leaving. In order to monitor users, an operator is required.

In order to alleviate this problem electronic card entry and exit systems were devised. In these types of systems, a user is issued with an identification card beforehand which is then inserted into a card reader and upon positive verification will allow entry via a locked door or similar barrier thus obviating the need for an operator. A disadvantage of this system is that for a large number of users, a database has to be maintained listing each of the users, particularly if each user has a unique identification then the verification system is required to scroll through each of the records to find a matching identity. Secondly, this system is also inconvenient if there are a large number of users entering a particular location at a given time such as a public transit way, the insertion and withdrawal of cards from a card reader is apt to cause bottlenecks at the entrance way.

Transit systems have been devised in which users are provided with a preprogrammed smart card. In this system, the turnstile or a terminal is able to monitor the smart card remotely thus the user simply walks past the turnstile without having to physically insert the card in a slot. The card is generally activated by the presence of a electromagnetic field generated by the terminal, the card then transmits an appropriate identification back to the terminal which verifies the card identification and allows entry of the user. These cards generally have limited computing power and are not able to perform complex computations. It is also desirable to authenticate these cards to prevent duplication or fraudulent entry. Because the cards have limited computing power, it is necessary to implement a authentication protocol that minimizes the computation performed by the card and furthermore is able to provide verification of the card by the terminal in a very short period of time, generally less than one second.

WO 98/39878 discloses a secure communication, arrangement that separates the tasks of identity verification and certificate issuing, allowing a disassociating of the long-term binding between Alice and her public/private key pair. This is accomplished by a registration authority issuing a password to Alice once it is satisfied of Alice's bona fide. Thereafter, whenever Alice wishes to communicate with Bob, she contacts a certification authority, identifies herself with the password and obtains a private key and a corresponding short-lived certificate. The certificate typically includes Alice's name and a public key in plaintext, and a signature. The signature is derived by hashing the plaintex portion of the certificate to obtain a value, and encrypting the value with the CA's private key. She then contacts Bob, submits her certificate. Bob performs the same hashing function to obtain a value, decrypts the signature with CA's public key to obtain a decrypted value, and compares the value Bob created with the decrypted value. If the two match, Bob is assured that the person submitting the certificate may be communicate with by using the public key included in the certificate.

Article by Hugo Krawczyk titled "SKEME: A Versatile Secure Key Exchange Mechanism for Internet," published via Network and Distributed System Security, proceedings of the Symposium in San Diego, CA, USA, on 22-23 February 1996, discloses a secure keys exchange protocol for Key management over Internet. SKEME constitutes a compact protocol that supports a variety of realistic scenarios and security models over Internet. SKEME may function in four modes. The basic mode provides both public key based key exchange and perfect forward security (PFS) (Diffie-Hellman). Another mode comprises key exchange based on public keys but without performing the Diffie-Hellman algorithm. Yet another mode comprises key exchange based on a previously shared key and provision of PFS. Finally, the last mode comprises a fast re-key mechanism based on efficient asymmetric key techniques only (e.g., MD5).

Article by David P. Jablon titled "Extended Password Key Exchange Protocols Immune to Dictionary Attack," published via Enabling Technologies: Infrastructure for Collaborative Enterprises, proceedings of the Sixth IEEE Workshop in Cambridge, MA, USA, on 18-20 June 1997, discloses an extension to further limit exposure to theft of a stored password-verifier, as applied to several protocols including the Simple Password Exponential Key Exchange (SPEKE). Alice proves knowledge of a password C to Bob, who has a stored verifier S, where S=g^{c}mod p. They perform a SPEKE exchange based on the shared secret S to derive ephemeral shared key K1. Bob chooses a random X and sends g^{K} mod p. Alice computes K2=g^{xc} mod p, and proves knowledge of {K1,K2}. Bob verifies this result to confirm that Alice knows C.

Document D7: JABLON D P: "Extended password key exchange protocols immune to dictionary attack": 18 June 1997, pages 248-255, XP010253331, DOI:10.1109/ENABL.1997.630822 which is the closest prior art discloses extension of the Extended Password Key exchange protocol, and in figure 4 it is shown an optimized B-EKE, and in figure 5 an optimized A-EKE using a Nyberg-Rueppcl method. Ignoring the pre-computation of QA, QB, and Uc, the A-EKE method runs in 4z, while B-EKE runs in

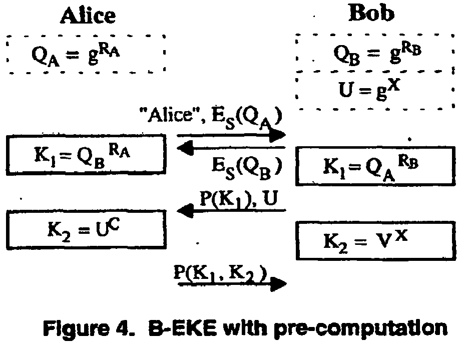

The ability to pre-compute both QA and QB might be reasonable for some DH-EKE systems, but it seems inappropriate for SPEKE, which determines these values based on each user's password.Also, it is noted that the protocols in figures 4 and 5 have Bob processing data after a reply is sent, and that there are two replies sent in sequence from Bob, with no intervening request from Alice. This implies either a multi-threaded server implementation, or asynchronous message passing.

European Patent Application No. 92308695.3, filed by the American Telephone and Telegraph Company, teaches a cryptographic protocol for secure communications. This application enables parties who share a relatively insecure password, to boot strap a camputationatly secure cryptographic system over an insecure network. The system employs a public key distribution system. To establish private and authenticated communication, each party generates a random string challenge member. The first party generates first challenge number which is then sent to a second party. The second party then generates a second challenge number which is and the two challenge numbers are sent back to the first party. Then the first party compares the former against the earlier challenge number, as does the second party. If the challenge numbers match, the challenge response mechanism is successful and the parties exchange messages. This system however is open to replay. Further, this application requires multiple parties to generate challenge numbers and it is these challenge numbers that are compared to one another for verification purposes. In this situation, the element used as a means for verification are exchanged over a network and are open to a replay attack.

An article entitled "Limitations of Challenge Response Entity Authentication Electronics Letter" publication details teaches a plurality of challenge response protocols utilized for identity verification over insecure channels. The paper suggests a typical weakness of challenge response protocols lies in the possibility of reflection attacks. However, in order to overcome this weakness, an asymmetric form of the protocol is suggested. Asymmetry is used to denote that a message passed in one direction has a different form than a message passed in the reverse direction. This however, is a lengthier process and requires multiple exchanges between parties.

### Further, in each aforementioned prior art documents, there is a need for the primary

### terminal or server to maintain a list of the secret keys for each authorized correspondent in the system.

The published paper of SCHNORR C P: "Efficient signature generation by smart cards" describes a signature generation scheme for smart cards. The paper further teaches the registration of users at a KAC (Key Authentication Centre) by generating an identification number I and a signature S for the identification number I and the user's public key. The verification of the signature or the authentication with the public key v must contain a verification of the public key. This verification can be done either by reading (I.v) from a public file or off-line by verifying the KAC's signature S for (I.v) using the public key of the KAC. The publication particulars are: Journal of cryptology. New York, NY. US. vol. 4. 1 January 1991. pages 161-174. XP000573164. DOl: 10.10071BF00196725.

Accordingly the present teaching provides a method of authenticating at least one of a pair of first and second correspondents C and T in a data communication system (10) in accordance with claim 1. Advantageous features are defined in the dependent claims.

Accordingly the present teaching provides a computer readable medium in accordance with claim 4.

### SUMMARY OF THE INVENTION

This invention seeks to provide a solution to the problem of card verification between a terminal and a card where the card device has limited computing power.

### BRIEF DESCRIPTION OF THE DRAWINGS

Embodiments of the present invention will now be described by way of example only with reference to the accompanying drawings in which:
Figure 1 is a schematic representation of a communication system; and
Figure 2 is a flow chart showing a verification protocol according to the present invention.

### DETAILED DESCRIPTION OF PREFERRED EMBODIMENTS

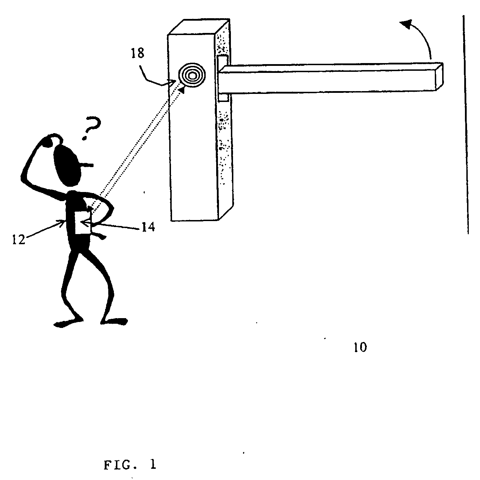

In the following description like numerals referred to like elements. Referring to figure 1, a transit control system is shown generally by numeral 10. In the system, a user 12 carries an identification card 14. A terminal including a card reader is provided for remote monitoring of card carrying users 12. The terminal 16 communicates with cards in a given area of proximity via, for example, electromagnetic means 18. These systems are readily available and will not be discussed further.

In the context of the present data communication system, the card and terminal are designated a pair of first and second correspondents C and T respectively. Depending upon the reading mechanism employed, the card generally is powered when brought in proximity to the magnetic field generated by the terminal 18. The card 14 contains a low power processing unit which is at least capable of performing simple calculations. In a typical data communication session, the card assembles a data string, which when assembled is transmitted to the terminal.

At system set-up, i.e. when a card is issued to a user, an encryption scheme is chosen and appropriate system parameters are defined. In the following example an elliptic curve encryption scheme is used. The details of encryption schemes will not be discussed as they are well known in the art. However, if the elliptic curve encryption system is being utilized, then a public value C = cP, is computed where P is a generator point on the elliptic curve. The public value C is signed by a certifying authority (CA) to produce a certificate Cert_{c}, containing the public key C and identification of the card C and stored in the card 14. A shared secret t_{c} = tC is calculated where t is a secret key known to the terminal T. This shared secret t_{C} is stored in the card within a secure boundary. Thus after the system set-up phase, the card contains a certificate Cert_{c} and a shared secret t_{c}.

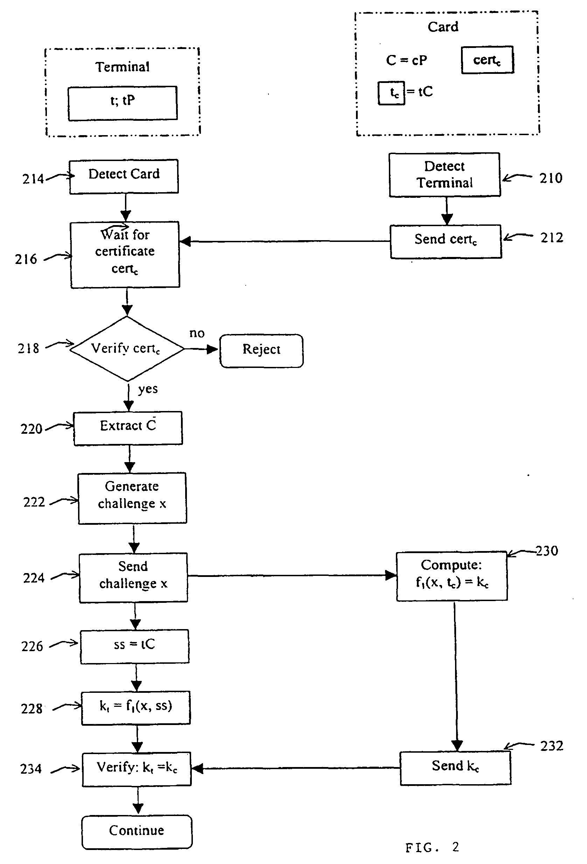

Referring now to figure 2, a protocol according to an embodiment of the present invention is shown generally by numeral 200. When the user 12 carrying the card 14 is in proximity to the terminal 18, the card detects the terminal 210 and sends its certificate Cert_{c} to the terminal T. Similarly when the terminal detects the card 214 it waits for a certificate Cert_{c} 216. When the terminal receives the certificate, it verifies the certificate using the CA's public key 218. If the certificate is not verified, a rejection signal is generated which may be used to alert or signal an appropriate barrier or event. However if the certificate is verified the terminal extracts the public key C of the card from the certificate 220. The terminal then generates a challenge *χ* 222, which may be a large integer, or any suitable bit string. This challenge *χ* is then sent to the card 224. At the same time the terminal computes a shared secret ss = tC and computes a challenge response verification value k_{T} *= f₁*(*χ,* ss), where *f₁* is a one-way function such as a secure hash function or one derived from the data encryption standard (DES). The card upon receipt of the challenge *χ* also computes its challenge response k_{c} by applying a one-way function *f₁* to the challenge value *χ* and the shared secret t_{c} to calculate k_{c} *= f₁*(*χ,* t_{C}). This challenge response value k_{c} is then sent back to the terminal 232 where it is verified 234 by the terminal comparing kₜ to k_{c}. If these values are equal then the card is verified.

It may be seen thus that the purpose of the challenge *χ* is to know that the card has the shared secret t_{c}, otherwise the data communication system is open to replay attack, where an observer watches for the k_{c} and may send it back at a later time. Furthermore it may be seen from the system that the terminal does not have to maintain a record of secret keys for each card authorized in the system. The advantage of this may well be appreciated when for example the card is a public rail transit card identification and the terminal has to maintain records for each of approximately a few hundred thousand users. Thus the present invention avoids this disadvantage.

In a further embodiment, the card may at step 230 in producing the challenge response compute a value k_{sig} *= f₁*(*χ*, t_{c}, *m*) where *m* is a message to be signed by the card. The card may then concatenate the challenge response k_{sig} with the message and sends this to the terminal. In this instance, the card is both authenticated and a message generated by the card is signed.

In a still further embodiment, the card may be authenticated as well as send an encrypted message. In this instance, the card calculates its challenge response value k_{enc} = f₁(*χ*, ss) and using this value as a key to calculate an encrypted value of a message *m* using for example a DES or DESX such that E = E_{Kenc} (*m*). In this instance the card is implicitly authenticated with the encrypted message. This may be useful for example when the card sends a P.I.N. back to the terminal.

In a further embodiment, the system rather than utilizing a single value oft, may use many values of t, i.e. tᵢ thus producing many shared secrets ss(tᵢ). In this instance, the card will send with its certificate the index i so that the terminal may extract the appropriate tᵢ to compute its shared secret as shown in step 226 figure 2.

In the above examples, the shared secret ss = t_{c} was for an elliptic curve implementation. For a finite field implementation, the shared secret may be calculated as ss = C^{T}. Furthermore a more generalized form of the shared secret is a function combining the values of the terminals private key t and the cards public key C using a cryptographic function *f₁* (t, C).

In general, this invention has application to situations where authenticated access to goods and services are required or where entry is to be controlled.

## Claims

1. A method of authenticating at least one of a pair of first and second correspondents C and T in a data communication system (10), said first correspondent C comprising a smart card with limited computing power and said second correspondent T comprising a card reader arranged to authenticate a plurality of said smart cards, said second correspondent T having a secret key t, said first correspondent C having a public key C and a pre-stored shared secret ss derived from combining said secret key t and said public key C, said method comprising the steps of:
said first correspondent C providing (212) said public key to said second correspondent T;
said first correspondent C obtaining a challenge value χ generated by said second correspondent T;
said first correspondent C computing (230) a challenge response k_{c} using said challenge value *χ* and said shared secret in a one-way function *f*₁; and
said first correspondent C sending (232) said challenge response k_{c} to said second correspondent T to enable said second correspondent T to verify said first correspondent C by comparing said challenge response k_{c} to a response verification value kₜ generated by said second correspondent T using said challenge value χ and said shared secret in said one-way function *f₁*, said shared secret having been computed by said second correspondent T using said secret key t and said public key provided by said first correspondent C.

2. The method of claim 1, wherein said public key is used in an elliptic curve scheme.

3. The method of claim 1 wherein said pre-stored shared secret ss is derived from combining said secret key t and said public key C according to ss=tC in the case of an elliptic curve or ss=C^{t} in the case of a finite field representation.

4. A computer readable medium comprising computer executable instructions that when executed cause a computing device (14, 18) to perform the method according to any one of claims 1 to 3.

5. A smart card (14) including computer executable instructions which when executed are arranged to perform the method of any one of claims 1 to 3.

## Patentansprüche

1. Verfahren zum Authentifizieren zumindest eines aus einem Paar von ersten und zweiten Korrespondenten C und T in einem Datenkommunikationssystem (10), wobei der erste Korrespondent C eine Smart-Karte mit begrenzter Rechenleistung aufweist und der zweite Korrespondent T einen Kartenleser aufweist, der ausgebildet ist zum Authentifizieren einer Vielzahl der Smart-Karten, wobei der zweite Korrespondent T einen geheimen Schlüssel t hat, der erste Korrespondent C einen öffentlichen Schlüssel C und ein vorher gespeichertes gemeinsames Geheimnis ss hat, das aus einem Kombinieren des geheimen Schlüssels t und des öffentlichen Schlüssels C abgeleitet ist, wobei das Verfahren die Schritte aufweist:
der erste Korrespondent C liefert (212) den öffentlichen Schlüssel an den zweiten Korrespondenten T;
der erste Korrespondent C erlangt einen Herausforderungswert χ, der von dem zweiten Korrespondenten T erzeugt wird;
der erste Korrespondent C berechnet (230) eine Herausforderungsantwort k_{c} unter Verwendung des Herausforderungswerts χ und des gemeinsamen Geheimnisses in einer Einwegfunktion f₁; und
der erste Korrespondent C sendet (232) die Herausforderungsantwort k_{c} an den zweiten Korrespondenten T, um dem zweiten Korrespondenten T zu ermöglichen, den ersten Korrespondenten C durch Vergleichen der Herausforderungsantwort k_{c} mit einem Antwortverifizierungswert kₜ zu verifizieren, der von dem zweiten Korrespondenten T erzeugt wird unter Verwendung des Herausforderungswerts χ und des gemeinsamen Geheimnisses in der Einwegfunktion f₁, wobei das gemeinsame Geheimnis durch den zweiten Korrespondenten T unter Verwendung des geheimen Schlüssels t und des öffentlichen Schlüssels berechnet wurde, der von dem ersten Korrespondenten C vorgesehen wird.

2. Das Verfahren gemäß Anspruch 1, wobei der öffentliche Schlüssel in einem Schema einer elliptischen Kurve verwendet wird.

3. Das Verfahren gemäß Anspruch 1, wobei das vorher gespeicherte gemeinsame Geheimnis ss aus einem Kombinieren des geheimen Schlüssels t und des öffentlichen Schlüssels C gemäß ss=tC in dem Fall einer elliptischen Kurve oder ss=C^{t} in dem Fall einer "endlicher Körper"-Repräsentation abgeleitet ist.

4. Ein computerlesbares Medium, das computerausführbare Anweisungen aufweist, die bei Ausführung eine Computervorrichtung (14, 18) veranlassen zum Durchführen des Verfahrens gemäß einem der Ansprüche 1 bis 3.

5. Eine Smart-Karte (14) mit computerausführbaren Anweisungen, die bei Ausführung ausgebildet sind zum Durchführen des Verfahrens gemäß einem der Ansprüche 1 bis 3.

## Revendications

1. Procédé d'authentification d'au moins une paire de premier et second correspondants C et T dans un système de communication de données (10), ledit premier correspondant C comprenant une carte à puce offrant une puissance de calcul limitée et ledit second correspondant T comprenant un lecteur de cartes conçu pour authentifier une pluralité desdites cartes à puce, ledit second correspondant T possédant une clef secrète t, ledit premier correspondant C possédant une clef publique C et un secret partagé préenregistré ss dérivé d'une combinaison de ladite clef secrète t et de ladite clef publique C, ledit procédé comprenant les étapes consistant à :
fournir (212) ladite clef publique par ledit premier correspondant C audit second correspondant T ;
obtenir, par ledit premier correspondant C, une valeur de défi χ produite par ledit second correspondant T ;
calculer (230) une réponse au défi k_{c} par ledit premier correspondant C en utilisant ladite valeur de défi χ et ledit secret partagé, à l'aide d'une fonction à sens unique *f*₁ *;*
envoyer (232) ladite réponse au défi k_{c} par ledit premier correspondant C audit second correspondant T afin de permettre audit second correspondant T de vérifier ledit premier correspondant C en comparant ladite réponse au défi k_{c} à une valeur de vérification de réponse kₜ produite par ledit second correspondant T en utilisant ladite valeur de défi χ et ledit secret partagé à l'aide de ladite fonction à sens unique *f*₁, ledit secret partagé ayant été calculé par ledit second correspondant T à l'aide de ladite clef secrète t et de ladite clef publique fournie par ledit premier correspondant C.

2. Procédé selon la revendication 1, dans lequel ladite clef publique est utilisée dans un mécanisme à course elliptique.

3. Procédé selon la revendication 1, dans lequel ledit secret partagé préenregistré ss est dérivé d'une combinaison de ladite clef secrète t et de ladite clef publique C selon ss = tC dans le cas d'une courbe elliptique ou selon ss = C^{t} dans le cas d'une représentation par un corps fini.

4. Support lisible par ordinateur comprenant des instructions exécutables qui, lorsqu'elles sont exécutées, amènent un dispositif informatique (14, 18) à exécuter le procédé selon l'une quelconque des revendications 1 à 3.

5. Carte à puce (14) comprenant des instructions exécutables qui, lorsqu'elles sont exécutées, sont conçues pour exécuter le procédé selon l'une quelconque des revendications 1 à 3.
